# FASCICULE DE BREVET EUROPEEN

(11) **EP 1 131 951 B1**
(45) Date de publication et mention de la délivrance du brevet: **26.03.2003**
(21) Numéro de dépôt: 99972405.7
(22) Date de dépôt: 16.11.1999
(51) Int. Cl.: H04N 5/225, H04N 9/093, G02B 15/10

(54) **ADAPTATEUR OPTIQUE D'OBJECTIFS CINEMA SUR CAMERA VIDEO**
ANPASSUNGSOPTIK FÜR EIN FILMKAMERA-OBJEKTIV AUF EINE VIDEOKAMERA
OPTICAL ADAPTER FOR MOUNTING CAMERA LENSES ON A VIDEO CAMERA

(30) Priorité: 18.11.1998 FR 9814484
(43) Date de publication de la demande: 12.09.2001
(73) Titulaire: Thales, 75008 Paris (FR)
(72) Inventeur: JOURJON, Bernadette, Thomson-CSF Prop. Intell., 94117 Arcueil Cedex (FR); DEBIZE, Jacques, Thomson-CSF Prop. Intell., 94117 Arcueil Cedex (FR)
(74) Mandataire: Vigand, Régis Louis Michel
(86) Numéro de dépôt international: FR9902809
(87) Numéro de publication internationale: WO00030348

(56) Documents cités:
- US-A- 4 264 151
- US-A- 4 589 750
- US-A- 5 726 809
- PATENT ABSTRACTS OF JAPAN vol. 097, no. 003, 31 mars 1997 (1997-03-31) & JP 08 286109 A (SONY CORP), 1 novembre 1996 (1996-11-01)

## Description

L'invention concerne le domaine des adaptateurs optiques dans les appareils de prise de vue. Les appareils de prise de vue se divisent, selon leur destination, en deux catégories distinctes, ayant chacune leurs avantages et leurs inconvénients, qui sont les appareils pour le monde du cinéma et ceux pour le monde de la vidéo. Les mondes du cinéma et de la vidéo suivent des développements séparés.

Chaque monde reste attaché à sa technologie propre, à savoir que le monde de la vidéo est essentiellement un monde de technologie électronique et de traitement d'image après la prise de vue, et que le monde du cinéma est un monde d'artistes dans lequel les conditions de prise de vue des images restent essentielles, le traitement d'image après la prise de vue pour obtenir des effets spéciaux étant plus difficile à réaliser.

Le but de l'invention est de rapprocher ces deux mondes du cinéma et de la vidéo en proposant un adaptateur d'objectifs cinéma sur caméra vidéo permettant la réalisation d'un appareil de vue combinant la plupart des avantages de l'un et de l'autre de ces deux mondes respectifs. Cet adaptateur permet d'utiliser les objectifs cinéma existants performants, de grande qualité et intégrant diverses fonctionnalités, avec une caméra vidéo ayant des récepteurs électroniques type CCD (« charge coupled device » pour « à transfert de charge »), ces récepteurs permettant un stockage et une duplication plus facile ainsi que des effets spéciaux et des montages d'image performants. Un adapteur selon l'art antétieur est décrit dans US-A-4 264 151.

Selon l'invention, il est prévu un adaptateur d'au moins un objectif sur une caméra, caractérisé en ce que : la caméra est une caméra vidéo comportant un séparateur spectral de la lumière en trois bandes spectrales, et trois récepteurs associés chacun à une bande spectrale, les trois récepteurs ayant le même premier format, les distances entre l'entrée du séparateur spectral et les surfaces sensibles des récepteurs étant différentes pour les trois bandes spectrales ; l'objectif est un objectif cinéma à plan focal image unique pour les trois bandes spectrales et ayant un deuxième format donné ; et en ce que l'adaptateur comporte : des premiers moyens optiques réalisant le transport d'image entre le plan focal image de l'objectif cinéma et les surfaces sensibles des récepteurs ; des deuxièmes moyens optiques effectuant un décalage axial relatif des trois bandes spectrales de sorte que les différences de distance sont compensées pour que l'image correspondante à chacune des bandes spectrales soit formée au niveau de la surface sensible du récepteur associé ; lesdits premiers et deuxièmes moyens optiques de transport et de décalage présentant un grandissement global qui change le format de l'image de l'objectif cinéma en le format commun des récepteurs.

L'invention sera mieux comprise et d'autres particularités et avantages apparaîtront à l'aide de la description ci-après et des dessins joints, donnés à titre d'exemples, où :
- la figure 1 représente la combinaison optique d'un mode particulier de réalisation d'un adaptateur selon l'invention ;
- les figures 2 à 4 représentent la FTM en fonction de la position de défocalisation par rapport au tirage paraxial, de l'adaptateur décrit à la figure 1, respectivement pour les bandes spectrales verte, rouge et bleue ;
- les figures 5A à 5H représentent des courbes d'aberrations pour différents points du champ, pour la bande spectrale verte de l'adaptateur décrit à la figure 1 ;

L'adaptateur selon l'invention transporte une image entre le plan focal image d'un objectif cinéma qui a un format qu'on appellera format cinéma, et les surfaces sensibles des récepteurs lesquels récepteurs ont un format commun qu'on appellera format vidéo.

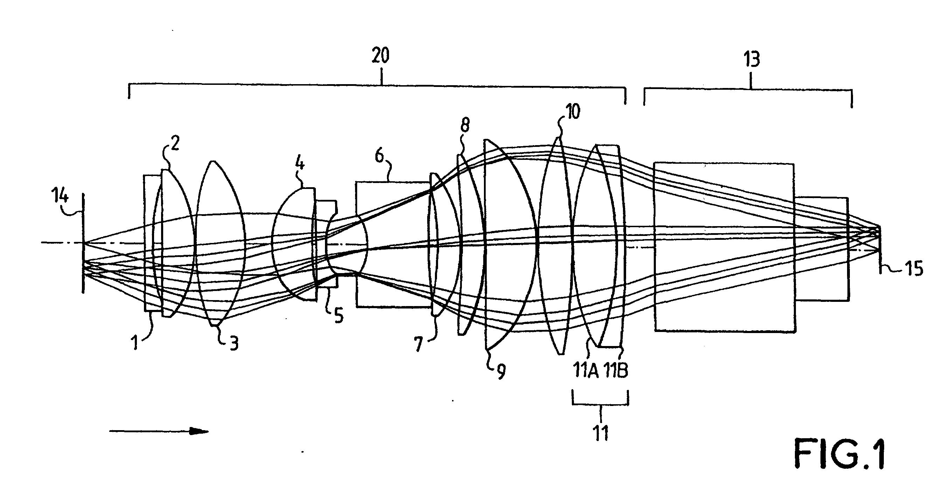

L'adaptateur selon l'invention permet, entre autres, par exemple les transformations suivantes :
- transformation d'une image de format cinéma « Super 16mm », format correspondant à une diagonale image utile valant 14,36mm, en une image de format vidéo « 2/3"(c'est-à-dire deux tiers de pouce) », format correspondant à une diagonale image utile valant 11mm. Le rapport de grandissement vaut -0,77 ou +0,77, selon que l'image est inversée ou non au niveau des récepteurs. Les distances des bandes spectrales entre l'entrée du séparateur spectral d'une part et les surfaces sensibles des récepteurs d'autre part sont décalées les unes par rapport aux autres, de +27µm entre la bande rouge et la bande verte et de -9µm entre la bande bleue et la bande verte. Un mode particulier de réalisation de l'adaptateur selon l'invention permettant de réaliser cette transformation est représenté sur la figure 1, décrite en détail ultérieurement ;
- transformation d'une image de format cinéma « 35mm », format correspondant à une diagonale image utile valant 27,2mm, en une image de format vidéo « 2/3" », format correspondant à une diagonale image utile valant 11mm. Le rapport de grandissement vaut -0,404 ou +0,404. Les distances des bandes spectrales entre l'entrée du séparateur spectral d'une part et les surfaces sensibles des récepteurs d'autre part sont décalées les unes par rapport aux autres, de +27µm entre la bande rouge et la bande verte et de -9µm entre la bande bleue et la bande verte.

L'adaptateur selon l'invention permet, entre autres, également les transformations suivantes :
- transformation d'une image de format cinéma « 35mm », format correspondant à une diagonale image utile valant 27,2mm, en une image de format vidéo « 1" », format correspondant à une diagonale image utile valant 16mm. Le rapport de grandissement vaut -0,588 ou +0,588. Les distances des bandes spectrales entre le plan focal image de l'objectif d'une part et les surfaces sensibles des récepteurs d'autre part sont décalées les unes par rapport aux autres, de +30µm entre la bande rouge et la bande verte et de +10µm entre la bande bleue et la bande verte ;
- transformation d'une image de format cinéma « Super 35mm », format correspondant à une diagonale image utile valant 31,1mm, en une image de format vidéo « 2/3" », format correspondant à une diagonale image utile valant 11mm. Le rapport de grandissement vaut -0,35 ou +0,35. Les distances des bandes spectrales entre le plan focal image de l'objectif d'une part et les surfaces sensibles des récepteurs d'autre part sont décalées les unes par rapport aux autres, de +27µm entre la bande rouge et la bande verte et de -9µm entre la bande bleue et la bande verte ;
- transformation d'une image de format cinéma « Super 35mm », format correspondant à une diagonale image utile valant 31,1mm, en une image de format vidéo « 1" », format correspondant à une diagonale image utile valant 16mm. Le rapport de grandissement vaut -0,51 ou +0,51. Les distances des bandes spectrales entre le plan focal image de l'objectif d'une part et les surfaces sensibles des récepteurs d'autre part sont décalées les unes par rapport aux autres, de +30µm entre la bande rouge et la bande verte et de +10µm entre la bande bleue et la bande verte ;
- transformation d'une image de format cinéma « Super 16mm », format correspondant à une diagonale image utile valant 14,36mm, en une image de format vidéo « 1" », format correspondant à une diagonale image utile valant 16mm. Le rapport de grandissement vaut -1,11 ou +1,11. Les distances des bandes spectrales entre le plan focal image de l'objectif d'une part et les surfaces sensibles des récepteurs d'autre part sont décalées les unes par rapport aux autres, de +30µm entre la bande rouge et la bande verte et de +10µm entre la bande bleue et la bande verte ;
- transformation d'une image de format cinéma « 16mm », format correspondant à une diagonale image utile valant 12,8mm, en une image de format vidéo « 2/3" », format correspondant à une diagonale image utile valant 11mm. Le rapport de grandissement vaut -0,86 ou +0,86. Les distances des bandes spectrales entre le plan focal image de l'objectif d'une part et les surfaces sensibles des récepteurs d'autre part sont décalées les unes par rapport aux autres, de +27µm entre la bande rouge et la bande verte et de -9µm entre la bande bleue et la bande verte ;
- transformation d'une image de format cinéma « 16mm », format correspondant à une diagonale image utile valant 12,8mm, en une image de format vidéo « 1" », format correspondant à une diagonale image utile valant 16mm. Le rapport de grandissement vaut -1,25 ou +1,25. Les distances des bandes spectrales entre le plan focal image de l'objectif d'une part et les surfaces sensibles des récepteurs d'autre part sont décalées les unes par rapport aux autres, de +30µm entre la bande rouge et la bande verte et de +10µm entre la bande bleue et la bande verte.

La figure 1 représente la combinaison optique d'un mode particulier de réalisation d'un adaptateur 20 selon l'invention, permettant de réaliser la transformation décrite ci-dessus d'une image de format cinéma « Super 16mm » en une image de format vidéo « 2/3" ». La lumière se propage de la gauche vers la droite de la figure 1, son sens de propagation étant représenté par une flèche, l'entrée et la sortie de la combinaison optique se situant respectivement à gauche et à droite de la figure 1. Le sens de propagation de la lumière sera considéré comme le sens amont-aval. Les rayons lumineux, représentés en traits pleins, n'ont été, dans un souci de clarté de la figure, tracés que pour la longueur d'onde centrale de la bande spectrale verte qui vaut 530 nanomètres.

La combinaison optique de l'adaptateur 20 se compose des éléments 1 à 11, l'élément 13 représentant schématiquement le séparateur spectral situé en aval de l'adaptateur 20, le séparateur 13 n'appartenant pas à la combinaison optique de l'adaptateur 20. Le plan 14 correspond au plan focal image de l'objectif cinéma, et la surface 15 à la surface sensible du récepteur de la bande spectrale verte. Seule la surface sensible 15 pour la bande spectrale verte a été représentée, pour des raisons de clarté de la figure. L'image correspondant à la bande spectrale verte est formée au niveau de la surface 15 sensible du récepteur associé non représenté sur la figure 1. L'optimum serait que cette image soit formée exactement sur la surface 15. Il en est de même pour les autres bandes spectrales, rouge et bleue. Les éléments 1 à 11 sont séparés par épaisseurs d'air.

L'objectif cinéma est habituellement un objectif à faible tirage.

De préférence, la combinaison optique de l'adaptateur 20 comporte séquentiellement un élément divergent 1, trois éléments convergents 2 à 4, deux éléments divergents 5 et 6, quatre éléments convergents 7 à 10, et un doublet 11 convergent constitué successivement d'un élément convergent 11A et d'un élément divergent 11B.

Plus précisément, cette combinaison optique comporte séquentiellement, le long d'un axe optique 18 :
- située à une distance du plan 14 valant sensiblement 14,8 mm, une lentille 1 divergente en verre d'indice n_{d1} valant sensiblement 1,61659 ayant une épaisseur au centre valant sensiblement 1,5 mm et dont les dioptres d'entrée et de sortie valent sensiblement respectivement 740,887mm et 50,815 mm ;
- située à une distance de la lentille 1 valant sensiblement 2,1mm (le dioptre de sortie de la lentille 1 et le dioptre d'entrée de la lentille 2 sont donc séparés par une distance de 2,1 mm), une lentille 2 convergente en verre d'indice n_{d2} valant sensiblement 1,744 ayant une épaisseur au centre valant sensiblement 7,9 mm et dont les dioptres d'entrée et de sortie valent sensiblement respectivement 480,641mm et 28,906 mm ;
- située à une distance de la lentille 2 valant sensiblement 0,2mm, une lentille 3 biconvexe convergente en verre d'indice n_{d3} valant sensiblement 1,43875 ayant une épaisseur au centre valant sensiblement 11,9 mm et dont les dioptres d'entrée et de sortie valent sensiblement respectivement 51,55mm et 30,199 mm ;
- située à une distance de la lentille 3 valant sensiblement 6,1mm, une lentille 4 convergente en verre d'indice n_{d3} valant sensiblement 1,43875 ayant une épaisseur au centre valant sensiblement 10 mm et dont les dioptres d'entrée et de sortie valent sensiblement respectivement 15,628mm et 72,017 mm;
- située à une distance de la lentille 4 valant sensiblement 0,7mm, une lentille 5 divergente en verre d'indice n_{d4} valant sensiblement 1.65412 ayant une épaisseur au centre valant sensiblement 2 mm et dont les dioptres d'entrée et de sortie valent sensiblement respectivement 1899 mm et 10,366mm ;
- située à une distance de la lentille 5 valant sensiblement 10,3mm, une lentille 6 divergente en verre d'indice n_{d5} valant sensiblement 1,6445 ayant une épaisseur au centre valant sensiblement 15 mm et dont les dioptres d'entrée et de sortie valent sensiblement respectivement 12,358mm et 193,507 mm ;
- situé à une distance de la lentille 6 valant sensiblement 1,8 mm, un ménisque 7 convergent en verre d'indice n_{d3} valant sensiblement 1,43875 ayant une épaisseur au centre valant sensiblement 5,9 mm et dont les dioptres d'entrée et de sortie valent sensiblement respectivement 76,431mm et 27,347 mm ;
- situé à une distance du ménisque 7 valant sensiblement 0,1 mm, un ménisque 8 convergent en verre d'indice n_{d3} valant sensiblement 1,43875 ayant une épaisseur au centre valant sensiblement 5,7 mm et dont les dioptres d'entrée et de sortie valent sensiblement respectivement 259,277mm et 44,997 mm ;
- située à une distance du ménisque 8 valant sensiblement 0,1mm, une lentille 9 biconvexe convergente en verre d'indice n_{d3} valant sensiblement 1,43875 ayant une épaisseur au centre valant sensiblement 12,8 mm et dont les dioptres d'entrée et de sortie valent sensiblement respectivement 3344,1 mm et 31,713 mm ;
- située à une distance de la lentille 9 valant sensiblement 0,1 mm, une lentille 10 biconvexe convergente en verre d'indice n_{d3} valant sensiblement 1,43875 ayant une épaisseur au centre valant sensiblement 8,4 mm et dont les dioptres d'entrée et de sortie valent sensiblement respectivement 68,697 mm et 123,96 mm ;
- située à une distance de la lentille 10 valant sensiblement 0,1mm, un doublet 11 convergent constitué d'une lentille biconvexe 11A convergente en verre d'indice n_{d3} valant sensiblement 1,43875 ayant une épaisseur au centre valant 11,2 mm et dont les rayons des dioptres d'entrée et de sortie valent sensiblement respectivement 51,951 mm et 56,886 mm assemblée par collage à une lentille 11B divergente en verre d'indice n_{d6} valant sensiblement 1,717 ayant une épaisseur au centre valant 1,5 mm et dont les rayons des dioptres d'entrée et de sortie valent sensiblement respectivement 56,886 mm et 197,954 mm.

Les indices n_{d1} à n_{d6} correspondent à une longueur d'onde valant 586 nanomètres.

La surface 15 est sensiblement situé à 61,25 mm du dioptre de sortie du doublet 11, en présence du séparateur 13. La distance entre le plan 14 et la surface 15 vaut sensiblement 191,456 mm. Le tirage optique de l'adaptateur 20 en l'absence du séparateur 13 vaut sensiblement 44,92 mm.

Afin de conserver sur la surface 15 la qualité initiale de l'image arrivant dans le plan 14, l'adaptateur 20 réalise de préférence la condition de conjugaison pupillaire, c'est-à-dire que :
- premièrement, le flux lumineux traversant la pupille de sortie de l'objectif cinéma traverse aussi la pupille d'entrée de l'adaptateur. L'optimum serait d'avoir la pupille de sortie de l'objectif cinéma contenue dans la pupille d'entrée de l'adaptateur 20.
- deuxièmement la pupille de sortie de l'adaptateur (20) est rejetée suffisamment loin pour que la variation d'incidence des rayons lumineux arrivant sur les plans dichroïques soit inférieure à une tolérance angulaire donnée. Cette tolérance vaut par exemple deux degrés. L'optimum serait de rejeter la pupille de sortie de l'adaptateur à l'infini, ce qui correspondrait à une tolérance angulaire nulle, c'est-à-dire à un angle d'incidence constant.

De préférence, la position de la pupille d'entrée de l'adaptateur 20 est sensiblement située au niveau de la position de la pupille de sortie de l'objectif cinéma non représenté sur la figure 1. L'optimum serait d'avoir les deux pupilles dans un même plan, ici perpendiculaire à l'axe optique 18.

Cette conjugaison pupillaire peut être réalisée au moyen d'éléments optiques 1 à 11 qui sont fixes, comme sur la figure 1. Cette solution a l'avantage de la simplicité de réalisation.

La conjugaison pupillaire peut aussi être réalisée au moyen d'une combinaison optique comportant des éléments optiques mobiles dont la position relative est ajustable de manière continue. Cette solution permet alors d'obtenir un adaptateur 20 permettant d'adapter à une même caméra vidéo des objectifs cinéma de formats différents. Cette solution étant cependant plus coûteuse que la solution à éléments fixes, un compromis entre le coût et les propriétés de la combinaison optique peut être réalisé avec une combinaison optique comportant des éléments optiques dont la position relative est ajustable de manière discrète.

Avantageusement, la combinaison optique de l'adaptateur 20 est un système centré d'éléments purement dioptriques.

De préférence, la combinaison optique de l'adaptateur 20 réalise une inversion d'image entre le plan 14 et la surface 15, la combinaison optique est alors plus courte qu'en l'absence d'inversion.

Sur la figure 1, la combinaison optique présente une ouverture valant sensiblement F/1,4 avec F la focale de la combinaison optique. Préférentiellement, l'ouverture de l'adaptateur 20 est sensiblement égale à l'ouverture du séparateur 13, ce qui empêche l'apparition de vignettage géométrique dans la combinaison optique de l'adaptateur 20.

De plus, dans la mesure où le séparateur (13) de la caméra vidéo a des aberrations géométriques et/ou chromatiques données, la combinaison optique assure de préférence la correction de ces aberrations.

Le domaine spectral préférentiel d'utilisation de l'adaptateur 20 est le domaine du visible, c'est-à-dire un domaine spectral allant par exemple de 400 à 700 nanomètres.

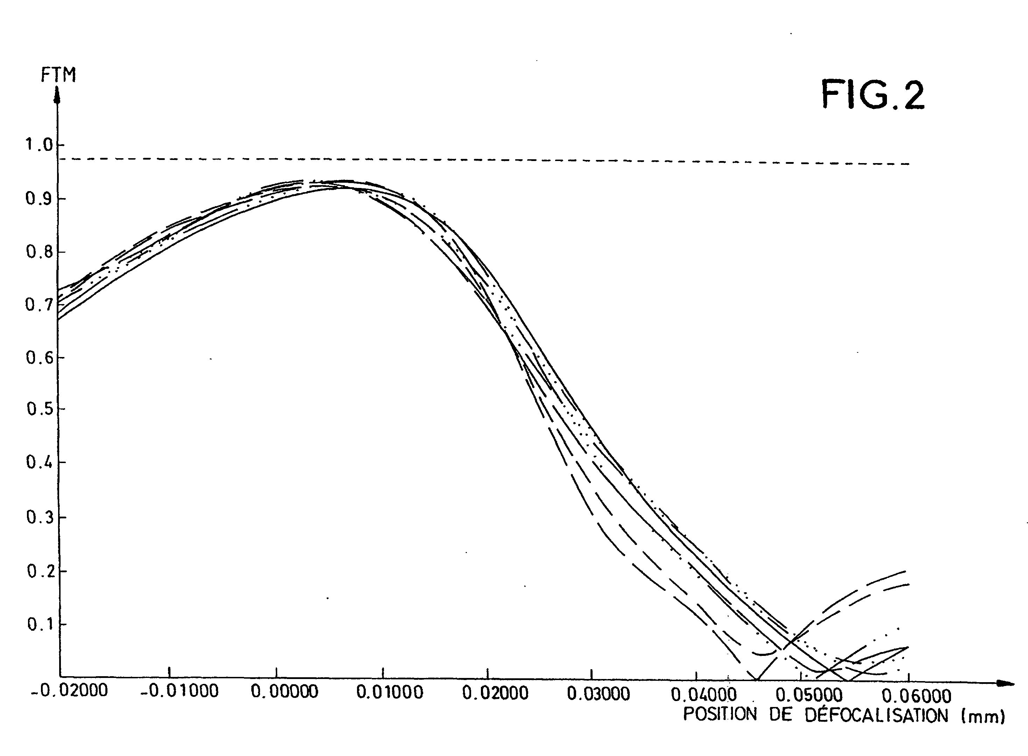

Les figures 2 à 5H représentent des simulations effectuées avec l'adaptateur 20 de la figure 1, montrant les excellentes performances optiques de l'adaptateur selon l'invention.

Les figures 2 à 4 représentent, respectivement pour les bandes spectrales verte, rouge et bleue, la FTM, c'est-à-dire la fonction de transfert de modulation de la combinaison optique, en fonction de la position de défocalisation par rapport au tirage paraxial de la combinaison optique, la défocalisation permettant une mise au point pour différents points dans le champ, dans deux directions Y et X orthogonales entre elles et à l'axe optique 18. La FTM est une FTM en mire créneau à une fréquence valant ici 40 cycles par millimètres. La fréquence utilisée correspond à la fréquence de coupure des récepteurs situés en aval du séparateur 13. La position de défocalisation est exprimée en millimètres.

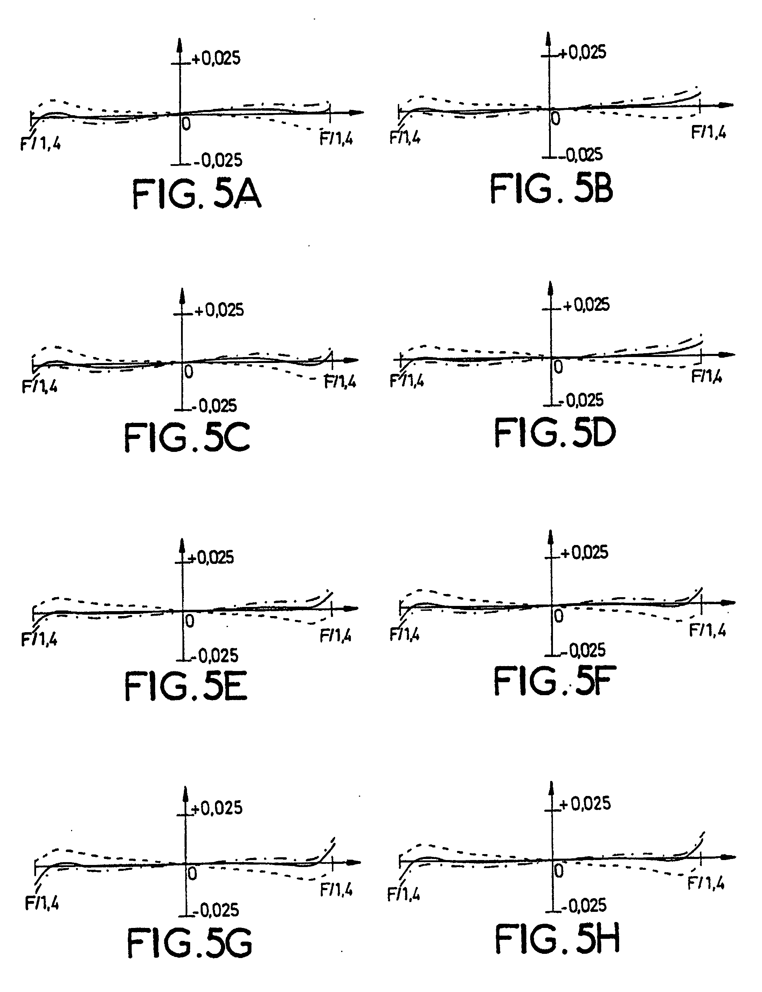

Sur les figures 2 à 4 :
- la limite de diffraction, égale dans les directions Y et X, est tracée en doubles traits pointillés ;
- les courbes dans les directions Y et X pour le centre du champ de coordonnées angulaires 0 degrés dans la direction Y et 0 degrés dans la direction X sont respectivement tracés en traits pleins et en traits mixtes ayant un point entre les tirets. Ici les deux courbes sont confondues, on ne voit que celle en traits pleins ;
- les courbes dans les directions Y et X pour un point du champ de coordonnées angulaires 0 degrés dans la direction Y et -4,01 degrés dans la direction X sont respectivement tracés en traits pointillés de grande taille et en traits mixtes ayant six points entre les tirets.
- les courbes dans les directions Y et X pour un point du champ de coordonnées angulaires -7,09 degrés dans la direction Y et 0 degrés dans la direction X sont respectivement tracés en traits pointillés de moyenne taille et en traits mixtes ayant cinq points entre les tirets.
- les courbes dans les directions Y et X pour un point du champ de coordonnées angulaires -7,09 degrés dans la direction Y et -4,01 degrés dans la direction X sont respectivement tracés en traits pointillés de petite taille et en traits mixtes ayant quatre points entre les tirets.
   La figure 2 concerne la bande spectrale verte. La bande spectrale verte résulte d'une moyenne pondérée entre les longueurs d'onde suivantes: 580nm avec le coefficient 1 ; 530nm avec le coefficient 2 ; 500nm avec le coefficient 1. Une très bonne FTM supérieure à 0,9 est obtenue pour tous les points considérés dans le champ, pour une défocalisation de 0,01mm.

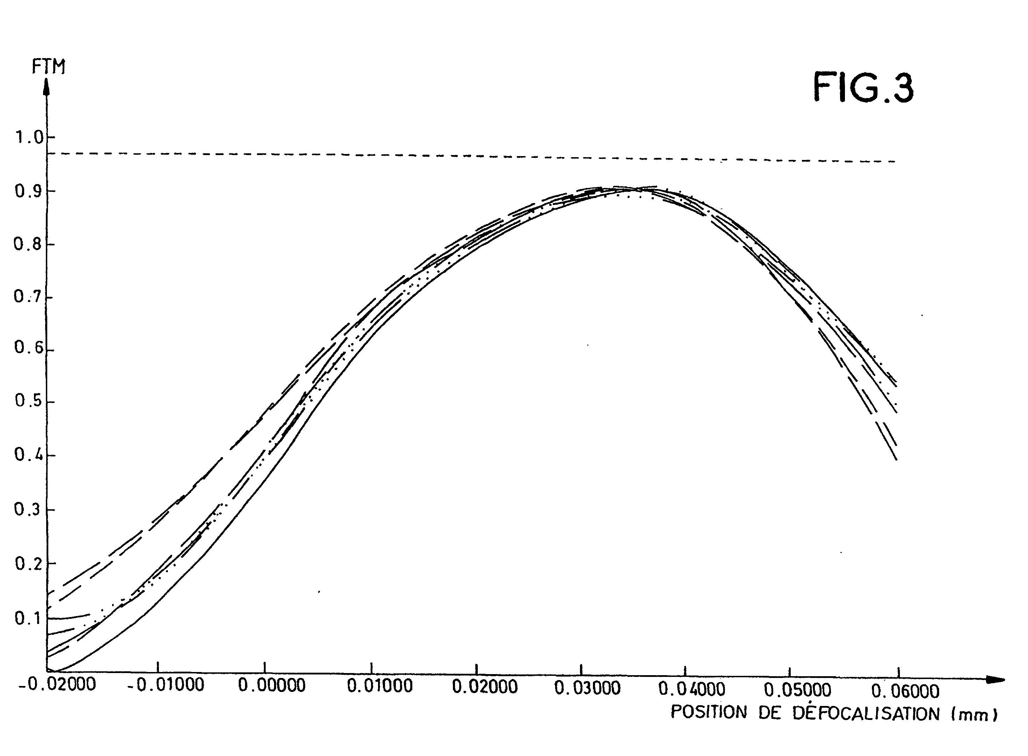

   La figure 3 concerne la bande spectrale rouge. La bande spectrale rouge résulte d'une moyenne pondérée entre les longueurs d'onde suivantes : 640nm avec le coefficient 1 ; 600nm avec le coefficient 2 ; 570nm avec le coefficient 1. Une très bonne FTM supérieure à 0,9 est obtenue pour tous les points considérés dans le champ, pour une défocalisation de 0,037mm, soit 27µm de plus que pour la bande spectrale verte.

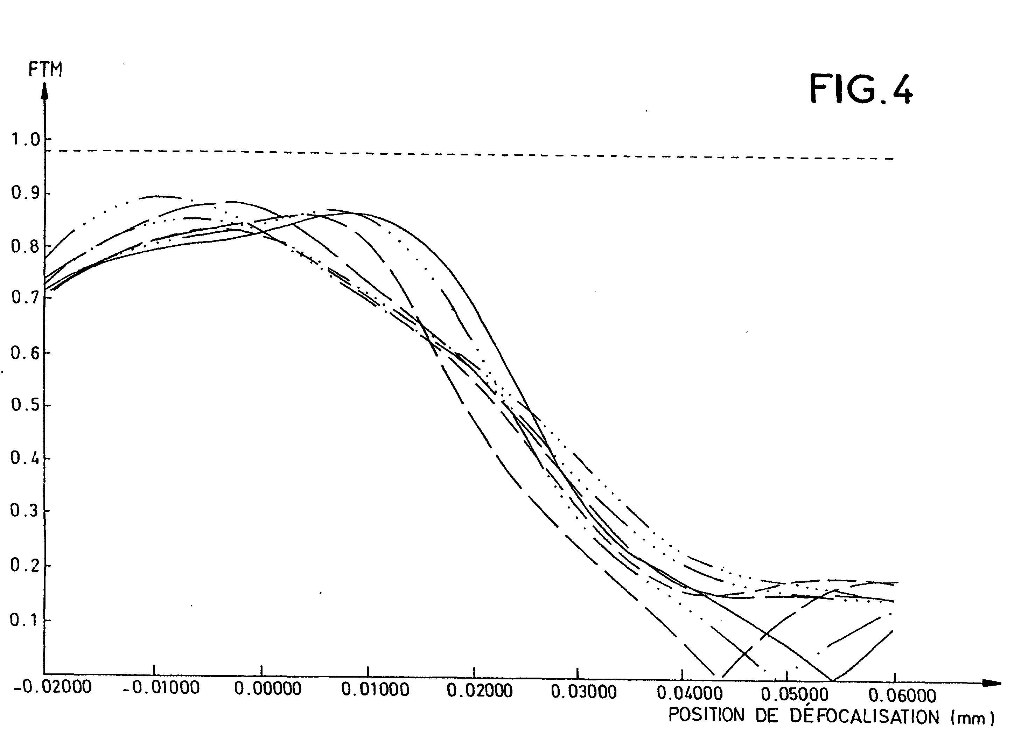

   La figure 4 concerne la bande spectrale bleue. La bande spectrale bleue résulte d'une moyenne pondérée entre les longueurs d'onde suivantes: 485nm avec le coefficient 1 ; 440nm avec le coefficient 2 ; 410nm avec le coefficient 1. Une bonne FTM supérieure à 0,8 est obtenue pour tous les points considérés dans le champ, pour une défocalisation de 0,001mm, soit 9µm de moins que pour la bande spectrale verte.
   Le groupe de figures 5A à 5H représente pour la bande spectrale verte, les courbes d'aberration en fonction de l'ouverture variant d'une ouverture nulle sur l'axe optique 18 représenté sur la figure 1, à l'ouverture maximale de part et d'autre de l'axe optique 18, dans les directions Y et X pour divers points dans le champ. L'ouverture nulle est notée 0 sur les figures et l'ouverture maximale vaut ici F/1,4. Les résultats sont équivalents pour les autres bandes spectrales, rouge et bleue.
- les courbes A et B représentent ces courbes d'aberration, suivant les directions Y et X, par rapport au centre du champ de coordonnées angulaires 0 degrés dans la direction Y et 0 degrés dans la direction X ;
- les courbes C et D représentent ces courbes d'aberration, suivant les directions Y et X, par rapport au point du champ de coordonnées angulaires 0 degrés dans la direction Y et -4,01 degrés dans la direction X ;
- les courbes E et F représentent ces courbes d'aberration, suivant les directions Y et X, par rapport au point du champ de coordonnées angulaires -7,09 degrés dans la direction Y et 0 degrés dans la direction X ;
- les courbes G et H représentent ces courbes d'aberration, suivant les directions Y et X, par rapport au point du champ de coordonnées angulaires -7,09 degrés dans la direction Y et -4,01 degrés dans la direction X.

Sur chacune des figures 5A à 5H, trois courbes d'aberration, correspondant aux trois longueurs d'onde participant à la moyenne pondérée de la bande spectrale verte définie à la figure 2, sont représentées : la longueur d'onde la plus élevée en traits pointillés, la longueur d'onde moins élevée en traits mixtes, la longueur d'onde médiane en traits pleins. Sur chacune de ces figures, l'aberration est en ordonnée et l'ouverture en abscisse. Sur chacune de ces figures, les plages d'excursion, notées par des petits traits perpendiculaires aux axes, sont de ± 0.025mm sur l'axe des ordonnées pour l'aberration, de F/1,4 de part et d'autre de l'origine 0 sur l'axe des abscisses des figures A, B, C, D, E, F, G, H.

Sur toutes les figures précédentes 5A à 5H, on constate que les aberrations ont une valeur qui reste faible.

## Revendications

1. Adaptateur (20) d'au moins un objectif sur une caméra, **caractérisé en ce que** :
- la caméra est une caméra vidéo comportant un séparateur (13) spectral de la lumière en trois bandes spectrales, et trois récepteurs associés chacun à une bande spectrale, les trois récepteurs ayant le même premier format, les distances entre l'entrée du séparateur (13) spectral et les surfaces sensibles (15) des récepteurs étant différentes pour les trois bandes spectrales ;
- l'objectif est un objectif cinéma à plan focal image unique (14) pour les trois bandes spectrales et ayant un deuxième format donné ;
et **en ce que** l'adaptateur (20) compote :
- des premiers moyens optiques (1 à 11) réalisant le transport d'image entre le plan focal image (14) de l'objectif cinéma et les surfaces sensibles (15) des récepteurs ;
- des deuxièmes moyens optiques (1 à 11) effectuant un décalage axial relatif des trois bandes spectrales de sorte que les différences de distance sont compensées pour que l'image correspondante à chacune des bandes spectrales soit formée au niveau de la surface sensible du récepteur associé ;
- lesdits premiers et deuxièmes moyens optiques (1 à 11) de transport et de décalage présentant un grandissement global qui change le format de l'image de l'objectif cinéma en le format commun des récepteurs.

2. Adaptateur selon la revendication 1, **caractérisé en ce que** l'objectif est à faible tirage.

3. Adaptateur selon l'une quelconque des revendications 1 à 2, ayant une pupille d'entrée et une pupille de sortie, le séparateur spectral comportant des plans dichroïques, **caractérisé en ce que** :
- le flux lumineux traversant la pupille de sortie de l'objectif cinéma traverse aussi la pupille d'entrée de l'adaptateur (20) ;
- la pupille de sortie de l'adaptateur (20) est rejetée suffisamment loin pour que la variation de l'incidence des rayons lumineux arrivant sur les plans dichroïques soit inférieure à une tolérance angulaire donnée.

4. Adaptateur selon la revendication 3, **caractérisé en ce que** la position de la pupille d'entrée de l'adaptateur (20) est sensiblement située au niveau de la position de la pupille de sortie de l'objectif cinéma.

5. Adaptateur selon l'une quelconque des revendications précédentes, en ce que les premiers et deuxièmes moyens optiques (1 à 11) sont constitués d'éléments optiques fixes.

6. Adaptateur selon l'une quelconque des revendications 1 à 4, **caractérisé en ce que** les premiers et deuxièmes moyens optiques (1 à 11) comportent des éléments optiques mobiles dont la position relative est ajustable de manière discrète.

7. Adaptateur selon l'une quelconque des revendications 1 à 4, **caractérisé en ce que** les premiers et deuxièmes moyens optiques (1 à 11) comportent des éléments optiques mobiles dont la position relative est ajustable de manière continue.

8. Adaptateur selon l'une quelconque des revendications précédentes, **caractérisé en ce que** les premiers et deuxièmes moyens optiques (1 à 11) sont constitués d'un système centré d'éléments purement dioptriques.

9. Adaptateur selon l'une quelconque des revendications précédentes, **caractérisé en ce que** les premiers et deuxièmes moyens optiques (1 à 11) réalisent l'inversion de l'image entre le plan focal image (14) de l'objectif cinéma et les surfaces sensibles (15) des récepteurs.

10. Adaptateur selon l'une quelconque des revendications précédentes, **caractérisé en ce que** l'ouverture de l'adaptateur (20) est sensiblement égale à l'ouverture du séparateur (13) spectral.

11. Adaptateur selon l'une quelconque des revendications précédentes, **caractérisé en ce que** le séparateur (13) de la caméra vidéo ayant des aberrations géométriques et/ou chromatiques données, les premiers et deuxièmes moyens optiques (1 à 11) assurent la correction de ces aberrations.

12. Adaptateur selon l'une quelconque des revendications précédentes, **caractérisé en ce que** les trois bandes spectrales appartiennent à un domaine spectral allant de 400 à 700 nanomètres.

13. Adaptateur selon l'une quelconque des revendications précédentes, **caractérisé en ce que** le format de l'image de l'objectif cinéma est un format « 35mm » et **en ce que** le format des récepteurs est un format « 2/3 de pouce ».

14. Adaptateur selon l'une quelconque des revendications 1 à 12, **caractérisé en ce que** le format de l'image de l'objectif cinéma est un format « Super 16mm » et **en ce que** le format des récepteurs est un format « 2/3 de pouce ».

15. Adaptateur selon l'une quelconque des revendications précédentes, **caractérisé en ce que** les premiers et deuxièmes moyens optiques (1 à 11) comportent séquentiellement un élément divergent (1), trois éléments convergents (2 à 4), deux éléments divergents (5 à 6), quatre éléments convergents (7 à 10), et un doublet (11) convergent constitué successivement d'un élément convergent (11A) et d'un élément divergent (11B).

16. Adaptateur selon la revendication 15, **caractérisé en ce que**, les valeurs des indices n_{d1} à n_{d6} étant données pour une longueur d'onde valant 586 nanomètres, les premiers et deuxièmes moyens optiques (1 à 11) comportent séquentiellement :
- une lentille (1) divergente en verre d'indice n_{d1} valant sensiblement 1,61659 ayant une épaisseur au centre valant sensiblement 1,5 mm et dont les dioptres d'entrée et de sortie valent sensiblement respectivement 740,887 mm et 50,815 mm ;
- une épaisseur d'air valant sensiblement 2,1 mm ;
- une lentille (2) convergente en verre d'indice n_{d2} valant sensiblement 1,744 ayant une épaisseur au centre valant sensiblement 7,9mm et dont les dioptres d'entrée et de sortie valent sensiblement respectivement 480,641 mm et 28,906 mm ;
- une épaisseur d'air valant sensiblement 0,2 mm ;
- une lentille (3) biconvexe convergente en verre d'indice n_{d3} valant sensiblement 1,43875 ayant une épaisseur au centre valant sensiblement 11,9 mm et dont les dioptres d'entrée et de sortie valent sensiblement respectivement 51,55 mm et 30,199 mm ;
- une épaisseur d'air valant sensiblement 6,1 mm ;
- une lentille (4) convergente en verre d'indice n_{d3} valant sensiblement 1,43875 ayant une épaisseur au centre valant sensiblement 10mm et dont les dioptres d'entrée et de sortie valent sensiblement respectivement 15,628 mm et 72,017 mm ;
- une épaisseur d'air valant sensiblement 0,7 mm ;
- une lentille (5) divergente en verre d'indice n_{d4} valant sensiblement 1,65412 ayant une épaisseur au centre valant sensiblement 2mm et dont les dioptres d'entrée et de sortie valent sensiblement respectivement 1899 mm et 10,366 mm ;
- une épaisseur d'air valant sensiblement 10,3 mm ;
- une lentille (6) divergente en verre d'indice n_{d5} valant sensiblement 1,6445 ayant une épaisseur au centre valant sensiblement 15mm et dont les dioptres d'entrée et de sortie valent sensiblement respectivement 12,358 mm et 193,507 mm ;
- une épaisseur d'air valant sensiblement 1,8 mm ;
- un ménisque (7) convergent en verre d'indice n_{d3} valant sensiblement 1,43875 ayant une épaisseur au centre valant sensiblement 5,9 mm et dont les dioptres d'entrée et de sortie valent sensiblement respectivement 76,431 mm et 27,347 mm ;
- une épaisseur d'air valant sensiblement 0,1 mm ;
- un ménisque (8) convergent en verre d'indice n_{d3} valant sensiblement 1,43875 ayant une épaisseur au centre valant sensiblement 5,7 mm et dont les dioptres d'entrée et de sortie valent sensiblement respectivement 259,277 mm et 44,997 mm ;
- une épaisseur d'air valant sensiblement 0,1 mm ;
- une lentille (9) biconvexe convergente en verre d'indice n_{d3} valant sensiblement 1,43875 ayant une épaisseur au centre valant sensiblement 12,8 mm et dont les dioptres d'entrée et de sortie valent sensiblement respectivement 3344,1 mm et 31,713 mm ;
- une épaisseur d'air valant sensiblement 0,1 mm ;
- une lentille (10) biconvexe convergente en verre d'indice n_{d3} valant - sensiblement 1,43875 ayant une épaisseur au centre valant sensiblement 8,4 mm et dont les dioptres d'entrée et de sortie valent sensiblement respectivement 68,697 mm et 123,96 mm ;
- une épaisseur d'air valant sensiblement 0,1 mm ;
- un doublet (11) convergent constitué d'une lentille (11A) biconvexe convergente en verre d'indice n_{d3} valant sensiblement 1,43875 ayant une épaisseur au centre valant 11,2 mm et dont les rayons des dioptres d'entrée et de sortie valent sensiblement respectivement 51,951mm et 56,886 mm assemblée par collage à une lentille (11B) divergente en verre d'indice n_{d6} valant sensiblement 1,717 ayant une épaisseur au centre valant 1,5 mm et dont les rayons des dioptres d'entrée et de sortie valent sensiblement respectivement 56,886 mm et 197,954 mm.

## Patentansprüche

1. Adapter (20) für mindestens ein Objektiv auf einer Kamera, **dadurch gekennzeichnet, daß**
- die Kamera eine Video-Kamera mit einem Spektralseparator (13) zur Aufteilung des Lichts in drei Spektralbänder und mit drei je einem der Spektralbänder zugeordneten Empfängern ist, wobei die drei Empfänger ein gleiches erstes Format besitzen, während die Abstände zwischen dem Eingang des Spektralseparators (13) und den lichtempfindlichen Flächen (15) des Empfängers für die drei Spektralbänder sich voneinander unterscheiden,
- das Objektiv ein Filmkamera-Objektiv mit einer einzigen Bildbrennebene (14) für die drei Spektralbänder und mit einem zweiten gegebenen Format ist,
und daß der Adapter (20) aufweist:
- erste optische Mittel (1 bis 11), die den Transport des Bilds von der Bildbrennebene (14) des Filmkamera-Objektivs zu den lichtempfindlichen Flächen (15) des Empfängers realisieren,
- zweite optische Mittel (1 bis 11), die eine relative axiale Verschiebung der drei Spektralbänder bewirken derart, daß die unterschiedlichen Entfernungen kompensiert werden, damit das entsprechende Bild für jedes der Spektralbänder in Höhe der lichtempfindlichen Fläche des zugeordneten Empfängers gebildet wird,
wobei die ersten und die zweiten optischen Mittel (1 bis 11) zum Transport und zur axialen Verschiebung eine globale Vergrößerung des Bilds bewirken, die das Format des Bilds des Filmkamera-Objektivs in das gemeinsame Format der Empfänger umwandelt.

2. Adapter nach Anspruch 1, **dadurch gekennzeichnet, daß** das Objektiv nur einen kurzen optischen Auszug aufweist.

3. Adapter nach einem beliebigen der Ansprüche 1 und 2 mit einer Eingangspupille und einer Ausgangspupille, wobei der Spektralseparator dichroitische Ebenen besitzt, **dadurch gekennzeichnet, daß**
- der die Ausgangspupille des Filmkamera-Objektivs durchquerende Lichtfluß auch die Eingangspupille des Adapters (20) durchquert,
- die Ausgangspupille des Adapters (20) so weit entfernt ist, daß die Veränderung des Einfallswinkels der in den dichroitischen Ebenen ankommenden Lichtstrahlen unter einer gegebenen Winkeltoleranzgrenze liegt.

4. Adapter nach Anspruch 3, **dadurch gekennzeichnet, daß** die Position der Eingangspupille des Adapters (20) im wesentlichen in Höhe der Lage der Ausgangspupille des Filmkamera-Objektivs liegt.

5. Adapter nach einem beliebigen der vorstehenden Ansprüche, **dadurch gekennzeichnet, daß** die ersten und zweiten optischen Mittel (1 bis 11) aus unbeweglchen optischen Elementen gebildet werden.

6. Adapter nach einem beliebigen der Ansprüche 1 bis 4, **dadurch gekennzeichnet, daß** die ersten und zweiten optischen Mittel (1 bis 11) verschiebbare optische Elemente enthalten, deren relative Lage in diskreten Schritten justierbar ist.

7. Adapter nach einem beliebigen der Ansprüche 1 bis 4, **dadurch gekennzeichnet, daß** die ersten und zweiten optischen Mittel (1 bis 11) verschiebbare optische Elemente enthalten, deren relative Lage kontinuierlich justierbar ist.

8. Adapter nach einem beliebigen der vorstehenden Ansprüche, **dadurch gekennzeichnet, daß** die ersten und die zweiten optischen Mittel (1 bis 11) von einem zentrierten System aus rein dioptrischen Elementen gebildet werden.

9. Adapter nach einem beliebigen der vorstehenden Ansprüche, **dadurch gekennzeichnet, daß** die ersten und die zweiten optischen Mittel (1 bis 11) die Inversion des Bilds zwischen der Bildbrennebene (14) des Filmkamera-Objektivs und den lichtempfindlichen Flächen (15) der Empfänger bewirken.

10. Adapter nach einem beliebigen der vorstehenden Ansprüche, **dadurch gekennzeichnet, daß** die Öffnung des Adapters (20) im wesentlichen der Öffnung des Spektralseparators (13) gleicht.

11. Adapter nach einem beliebigen der vorstehenden Ansprüche, **dadurch gekennzeichnet, daß**, wenn der Separator (13) der Videokamera gegebene geometrische und/oder chromatische Aberrationen aufweist, die ersten und zweiten optischen Mittel (1 bis 11) die Korrektur dieser Aberrationen bewirken.

12. Adapter nach einem beliebigen der vorstehenden Ansprüche, **dadurch gekennzeichnet, daß** die drei Spektralbänder einem Spektralbereich von 400 bis 700 nm angehören.

13. Adapter nach einem beliebigen der vorstehenden Ansprüche, **dadurch gekennzeichnet, daß** das Bildformat des Filmkamera-Objektivs ein "35 mm"- Format ist und daß das Format der Empfänger ein "2/3 Inch"- Format ist.

14. Adapter nach einem beliebigen der Ansprüche 1 bis Objektivs ein "16 mm"- Format ist und daß das Format der Empfänger ein "2/3 inch"- Format ist.

15. Adapter nach einem beliebigen der vorstehenden 5 Ansprüche, **dadurch gekennzeichnet, daß** die ersten und zweiten optischen Mittel (1 bis 11) hintereinander ein divergierendes Element (1), drei konvergierende Elemente (2, 3, 4), zwei divergierende Elemente (5, 6), vier konvergierende Elemente (7 bis 10) und eine konvergierende Doublette enthält, welche hintereinander aus einem konvergierenden Element (11A) und einem divergierenden Element (11B) besteht.

16. Adapter nach Anspruch 15, **dadurch gekennzeichnet, daß**, wenn die Werte der Brechungsindizes n_{d1} bis n_{d6} für eine Wellenlänge von 586 nm gegeben sind, die ersten und zweiten optischen Mittel (1 bis 11) hintereinander aufweisen:
- eine divergierende Linse (1) aus einem Glas mit einem Brechungsindex n_{d1} von im wesentlichen 1,61659 und einer Dicke im Zentrum von im wesentlichen 1,5 mm, wobei die Eingangs- und Ausgangsdiopter im wesentlichen den Wert 740,887 mm beziehungsweise 50,815 mm besitzen;
- eine Luftschicht einer Dicke von 2,1 mm;
- eine konvergierende Linse (2) aus einem Glas mit einem Brechungsindex n_{d2} von im wesentlichen 1,744 und einer Dicke im Zentrum von im wesentlichen 7,9 mm, wobei die Eingangsund Ausgangsdiopter im wesentlichen den Wert 480,641 mm beziehungsweise 28,906 mm besitzen;
- eine Luftschicht einer Dicke von 0,2 mm
- eine bikonvexe, konvergierende Linse (3) aus einem Glas mit einem Brechungsindex n_{d3} von im wesentlichen 1,43875 und einer Dicke im Zentrum von im wesentlichen 11,9 mm, wobei die Eingangs- und Ausgangsdiopter im wesentlichen den Wert 51,55 mm beziehungsweise 30,199 mm besitzen;
- eine Luftschicht einer Dicke von im wesentlichen 6,1 mm;
- eine konvergierende Linse (4) aus einem Glas mit einem Brechungsindex n_{d3} von im wesentlichen 1,43875 und einer Dicke im Zentrum von im wesentlichen 10 mm, wobei die Eingangs- und Ausgangsdiopter im wesentlichen den Wert 15,628 mm beziehungsweise 72,017 mm besitzen;
- eine Luftschicht einer Dicke von im wesentlichen 0,7 mm;
- eine divergierende Linse (5) aus einem Glas mit einem Brechungsindex n_{d4} von im wesentlichen 1,65412 und einer Dicke im Zentrum von im wesentlichen 2 mm, wobei die Eingangs- und Ausgangsdiopter im wesentlichen den Wert 1899 mm beziehungsweise 10,366 mm besitzen;
- eine Luftschicht einer Dicke von im wesentlichen 10,3 mm;
- eine divergierende Linse (6) aus einem Glas mit einem Brechungsindex n_{d5} von im wesentlichen 1,6445 und einer Dicke im Zentrum von im wesentlichen 15 mm, wobei die Eingangsund Ausgangsdiopter im wesentlichen den Wert 12,358 mm beziehungsweise 193,507 mm besitzen;
- eine Luftschicht einer Dicke von im wesentlichen 1,8 mm;
- einen konvergierenden Meniskus (7) aus einem Glas mit einem Brechungsindex n_{d3} von im wesentlichen 1,43875 und einer Dicke im Zentrum von im wesentlichen 5,9 mm, wobei die Eingangs- und Ausgangsdiopter im wesentlichen den Wert 76,431 mm beziehungsweise 27,347 mm besitzen;
- eine Luftschicht einer Dicke von im wesentlichen 0,1 mm;
- einen konvergierenden Meniskus (8) aus einem Glas mit einem Brechungsindex n_{d3} von im wesentlichen 1,43875 und einer Dicke im Zentrum von im wesentlichen 5,7 mm, wobei die Eingangs- und Ausgangsdiopter im wesentlichen den Wert 259,277 mm beziehungsweise 44,997 mm besitzen;
- eine Luftschicht einer Dicke von im wesentlichen 0,1 mm;
- eine bikonvexe, konvergierende Linse (9) aus einem Glas mit einem Brechungsindex n_{d3} von im wesentlichen 1,43875 und einer Dicke im Zentrum von im wesentlichen 12,8 mm, wobei die Eingangs- und Ausgangsdiopter im wesentlichen den Wert 3344,1 mm beziehungsweise 31,713 mm besitzen;
- eine Luftschicht einer Dicke von im wesentlichen 0,1 mm;
- eine bikonvexe, konvergierende Linse (10) aus einem Glas mit einem Brechungsindex n_{d3} von im wesentlichen 1,43875 und einer Dicke im Zentrum von im wesentlichen 8,4 mm, wobei die Eingangs- und Ausgangsdiopter im wesentlichen den Wert 68,697 mm beziehungsweise 123,96 mm besitzen;
- eine Luftschicht einer Dicke von im wesentlichen 0,1 mm;
- eine konvergierende Doublette (11), bestehend aus einer bikonvexen konvergierenden Linse 11A aus einem Glas mit einem Brechungsindex n_{d3} von im wesentlichen 1,43875 und einer Dicke im Zentrum von 11,2 mm, deren Radien der Eingangs- und Ausgangsdiopter im wesentlichen den Wert 51,951 mm beziehungsweise 56,886 mm besitzen, auf die eine divergierende Linse (11B) aus einem Glas mit dem Brechungsindex n_{d6} von im wesentlichen 1,717 und mit einer Dicke im Zentrum von 1,5 mm und mit Eingangs- und Ausgangsdioptern von im wesentlichen 56,886 mm und 197,954 mm aufgeklebt ist.

## Claims

1. Adapter (20) for adapting at least one objective to a camera, **characterized in that**:
- the camera is a video camera comprising a spectral splitter (13) for splitting light into three spectral bands and three receivers each associated with one spectral band, the three receivers having the same first format, the distances between the entrance of the spectral splitter (13) and the sensitive surfaces (15) of the receivers being different for the three spectral bands;
- the objective is a cine-camera objective (14) with only one image focal plane for all three spectral bands and has a second given format;
and **in that** the adapter (20) comprises:
- first optical means (1 to 11) conveying images between the image focal plane (14) of the cine-camera objective and the sensitive surfaces (15) of the receivers;
- second optical means (1 to 11) producing a relative axial offset of the three spectral bands so that the differences in distance are compensated for, so that the image corresponding to each of the spectral bands is formed at the sensitive surface of the associated receiver;
- said first and second optical means (1 to 11) of conveyance and offsetting have an overall magnification that changes the format of the image of the cine-camera objective into the common format of the receivers.

2. Adapter according to Claim 1, **characterized in that** the objective has low extension.

3. Adapter according to any one of Claims 1 to 2, having an entrance pupil and an exit pupil, the spectral splitter comprising dichroic planes, **characterized in that**:
- the light flux crossing the exit pupil of the cine-camera objective also crosses the entrance pupil of the adapter (20);
- the exit pupil of the adapter (20)is rejected to a distance far enough for the variation of the incidence of the light rays reaching the dichroic planes to be smaller than a given angular tolerance.

4. Adapter according to Claim 3, **characterized in that** the position of the entrance pupil of the adapter (20) is substantially located at the position of the exit pupil of the cine-camera objective.

5. Adapter according to any one of the above claims, **characterized in that** the first and second optical means (1 to 11) are formed by fixed optical elements.

6. Adapter according to any one of Claims 1 to 4, **characterized in that** the first and second optical means (1 to 11) comprise mobile optical elements whose relative positions are discretely adjustable.

7. Adapter according to any one of Claims 1 to 4, **characterized in that** the first and second optical means (1 to 11) comprise mobile optical elements whose relative positions are continuously adjustable.

8. Adapter according to any one of the preceding claims, **characterized in that** the first and second optical means (1 to 11) are a centred system of purely dioptric elements.

9. Adapter according to any one of the preceding claims, **characterized in that** the first and second optical means (1 to 11) invert the image between the image focal plane (14) of the cine-camera objective and the sensitive surfaces (15) of the receivers.

10. Adapter according to any one of the preceding claims, **characterized in that** the aperture of the adapter (20) is substantially equal to the aperture of the spectral splitter (13).

11. Adapter according to any one of the preceding claims, **characterized in that**, with the splitter (13) of the video camera having given geometrical and/or chromatic aberrations, the first and second optical means (1 to 11) correct these aberrations.

12. Adapter according to any one of the preceding claims, **characterized in that** the three spectral bands belong to a spectral domain ranging from 400 to 700 nanometres.

13. Adapter according to any one of the preceding claims, **characterized in that** the format of the image of the cine-camera objective is a "35 mm" format and **in that** the format of the receivers is a "2/3 inch" format.

14. Adapter according to any one of claims 1 to 12, **characterized in that** the format of the image of the cine-camera objective is a "Super 16 mm" format and **in that** the format of the receivers is a "2/3 inch" format.

15. Adapter according to any one of the preceding claims, **characterized in that** the first and second optical means (1 to 11) comprise, in order, a diverging element (1), three converging elements (2 to 4), two diverging elements (5 to 6), four converging elements (7 to 10), and a converging doublet (11) formed by, in succession, a converging element (11A) and a diverging element (11B).

16. Adapter according to Claim 15, **characterized in that**, the values of the indices n_{d1} to n_{d6} being given for a wavelength equal to 586 nanometres, the first and second optical means (1 to 11) comprise, in order:
- a diverging lens (1) made of glass with an index n_{d1} substantially equal to 1.61659 having a thickness at the centre substantially equal to 1.5 mm, its entrance and exit diopters being substantially equal respectively to 740.887 mm and 50.815 mm;
- an air thickness substantially equal to 2.1 mm;
- a converging lens (2) made of glass with an index n_{d2} substantially equal to 1.744 having a thickness at the centre substantially equal to 7.9 mm, its entrance and exit diopters being substantially equal respectively to 480.641 mm and 28.906 mm;
- an air thickness substantially equal to 0.2 mm;
- a biconvex converging lens (3) made of glass with an index n_{d3} substantially equal to 1.43875 having a thickness at the centre substantially equal to 11.9 mm, its entrance and exit diopters being substantially equal respectively to 51.55 mm and 30.199 mm;
- an air thickness substantially equal to 6.1 mm;
- a converging lens (4) made of glass with an index n_{d3} substantially equal to 1.43875 having a thickness at the centre substantially equal to 10 mm, its entrance and exit diopters being substantially equal respectively to 15.628 mm and 72.017 mm; an air thickness substantially equal to 0.7 mm;
- a diverging lens (5) made of glass with an index n_{d4} substantially equal to 1.65412 having a thickness at the centre substantially equal to 2 mm, its entrance and exit diopters being substantially equal respectively to 1899 mm and 10.366 mm;
- an air thickness substantially equal to 10.3 mm;
- a diverging lens (6) made of glass with an index n_{d5} substantially equal to 1.6445 having a thickness at the centre substantially equal to 15 mm, its entrance and exit diopters being substantially equal respectively to 12.358 mm and 193.507 mm;
- an air thickness substantially equal to 1.8 mm;
- a converging meniscus (7) made of glass with an index n_{d3} substantially equal to 1.43875 having a thickness at the centre substantially equal to 5.9 mm, its entrance and exit diopters being substantially equal respectively to 76.431 mm and 27.347 mm;
- an air thickness substantially equal to 0.1 mm;
- a converging meniscus (8) made of glass with an index n_{d3} substantially equal to 1.43875 having a thickness at the centre substantially equal to 5.7 mm, its entrance and exit diopters being substantially equal respectively to 259.277 mm and 44.997 mm;
- an air thickness substantially equal to 0.1 mm;
- a converging biconvex lens (9) made of glass with an index n_{d3} substantially equal to 1.43875 having a thickness at the centre substantially equal to 12.8 mm, its entrance and exit diopters being substantially equal respectively to 3344.1 mm and 31.713 mm;
- an air thickness substantially equal to 0.1 mm;
- a converging biconvex lens (10) made of glass with an index n_{d3} substantially equal to 1.43875 having a thickness at the centre substantially equal to 8.4 mm, its entrance and exit diopters being substantially equal respectively to 68.697 mm and 123.96 mm;
- an air thickness substantially equal to 0.1 mm;
- a converging doublet (11) formed by a converging biconvex lens (11A) made of glass with an index n_{d3} substantially equal to 1.43875 having a thickness at the centre equal to 11.2 mm, the radii of its entrance and exit diopters being substantially equal respectively to 51.951 mm and 56.886 mm, joined by bonding to a diverging lens (11B) made of glass with an index n_{d6} substantially equal to 1.717 having a thickness at the centre equal to 1.5 mm, the radii of its entrance and exit diopters being substantially equal respectively to 56.886 mm and 197.954 mm.
